# EUROPÄISCHE PATENTSCHRIFT

(11) **EP 3 250 405 B1**
(45) Veröffentlichungstag und Bekanntmachung des Hinweises auf die Patenterteilung: **12.08.2020**
(21) Anmeldenummer: 16700860.6
(22) Anmeldetag: 15.01.2016
(51) Int. Cl.: B60J 7/22

(54) **WINDLEITEINRICHTUNG FÜR EINEN OFFENEN PERSONENKRAFTWAGEN**
AIR DEFLECTING DEVICE FOR AN OPEN AUTOMOBILE
DISPOSITIF DÉFLECTEUR D'AIR POUR VÉHICULE AUTOMOBILE CABRIOLET

(30) Priorität: 27.01.2015 DE 102015000964; 05.09.2015 DE 102015011794
(43) Veröffentlichungstag der Anmeldung: 06.12.2017
(73) Patentinhaber: Daimler AG, 70372 Stuttgart (DE)
(72) Erfinder: KRÖBER, Stefan, 72074 Tübingen (DE); MELCHGER, Nicolai, 72218 Wildberg (DE); MOESSNER, Alexander, 71277 Rutesheim (DE); REINBERG, Stephan, 71069 Sindelfingen (DE); TOKUNO, Hironori, 71088 Holzgerlingen (DE); WENZLER, Joachim, 75397 Simmozheim (DE)
(74) Vertreter: JENSEN & SON
(86) Internationale Anmeldenummer: PCT/EP2016/000069
(87) Internationale Veröffentlichungsnummer: WO 2016/119998

(56) Entgegenhaltungen:
- EP-A1- 1 281 556
- DE-A1- 10 117 364
- DE-A1- 19 958 748
- DE-A1-102010 002 908
- DE-C1- 19 603 670

## Beschreibung

Die Erfindung betrifft eine Windleiteinrichtung für einen offenen Personenkraftwagen gemäß Oberbegriff des Anspruchs 1.

Eine solche Windleiteinrichtung ist beispielsweise bereits aus dem Mercedes-Benz E-Klasse Cabriolet (Baureihe A207) aus der DE 101 17 364 A1 oder aus der DE 10 2006 023 911 A1 bekannt. Die Windleiteinrichtung umfasst dabei ein zwischen einer eingefahrenen Stellung und wenigstens einer Windleitstellung gegenüber einem Windschutzscheibenrahmen verstellbares eigensteifes Windleitelement, welches in Fahrzeughochrichtung relativ zu dem Windschutzscheibenrahmen verstellt werden kann.

Der Windschutzscheibenrahmen begrenzt eine Scheibenöffnung für eine Windschutzscheibe, wobei das eigensteife Windleitelement in der Windleitstellung dazu dient, bei offener Fahrt des Personenkraftwagens über die Windschutzscheibe strömenden Fahrtwind über den Innenraum zu leiten, zu vergleichsmäßigen und hierdurch übermäßige Zuglufterscheinungen, die zum Beispiel durch eine sich hinter dem Innenraum bildende horizontale Windwalze entstehen, zu vermeiden. Durch das Windleitelement sollen nicht nur unangenehme Zuglufterscheinungen, sondern auch Verwirbelungen und damit einhergehende Windgeräusche reduziert werden, um dadurch bei offener Fahrt des Personenkraftwagens einen besonders hohen Fahrkomfort zu realisieren.

Aufgabe der vorliegenden Erfindung ist es, eine Windleiteinrichtung der eingangs genannten Art zu schaffen, mittels welcher sich ein besonders hoher Fahrkomfort realisieren lässt.

Diese Aufgabe wird erfindungsgemäß durch eine Windleiteinrichtung mit den Merkmalen des Anspruchs 1 gelöst. Vorteilhafte Ausgestaltungen mit zweckmäßigen Weiterbildungen der Erfindung sind in den übrigen Ansprüchen angegeben.

Um eine Windleiteinrichtung der eingangs genannten Art zu schaffen, mittels welcher sich ein besonders hoher Fahrkomfort, insbesondere bei einer offenen Fahrt des Personenkraftwagens, realisieren lässt, ist es gemäß Anspruch 1 vorgesehen, dass an dem lamellenförmigen Windleitelement eine Mehrzahl von Störkörpern angeordnet ist, welche an der Unterseite, insbesondere der unteren Flachseite des Windleitelements vorgesehen sind. Die Störkörper sind dabei zumindest in der wenigstens einen Windleitstellung des Windleitelements bei einer Vorwärtsfahrt des Personenkraftwagens von Luft, das heißt von Fahrtwind umströmbar und beeinflussen die Luft beziehungsweise deren Strömung derart vorteilhaft, dass die Entstehung von übermäßigen Luftverwirbelungen und Wind- und Luftablösegeräuschen, welche von im Fahrgastraum des Kraftwagens sitzenden Insassen wahrnehmbar sind, vermieden werden kann. Somit kann durch die erfindungsgemäße Windleiteinrichtung insbesondere bei offener Fahrt des Personenkraftwagens ein besonders hoher Fahrkomfort realisiert werden.

Bei einem besonders vorteilhaften Ausführungsbeispiel der Windleiteinrichtung ist vorgesehen, dass die Störkörper so ausgebildet und angeordnet sind, dass im Fahrbetrieb des Kraftwagens und bei in Windleitstellung angeordnetem Windleitelement eine nicht-kohärente Ablösung der Luftströmung an der hinteren Randkante des Windleitelements über zumindest einen wesentlichen Teil der Längserstreckung des Windleitelements realisierbar ist. Mittels der Störkörper wird also erreicht, dass die an der hinteren Randkante des lamellenförmigen Windleitelements sich ablösende Luftströmung, welche zu in Vorwärtsfahrtrichtung des Kraftwagens sich drehenden beziehungsweise rotierenden Luftwalzen führt, so beeinflusst wird, dass es über die Längserstreckung des Windleitelements nicht nur zu einer sich über die im Wesentlichen gesamte Länge der hinteren Randkante erstreckenden, gleichmäßigen Luftwalzenbildung kommt, sondern dass über die Länge der Randkante zeitliche Unterschiede zwischen den sich von der unteren Randkante ablösenden Luftwalzen ergeben. Diese Luftwalzen verursachen ein unkorreliertes, breitbandiges Rauschen, so dass sich insgesamt ein für die Insassen angenehmeres Geräuschniveau ergibt.

Erfindungsgemäß ist vorgesehen, dass die Störkörper im Bereich der -im Kraftwagen eingebauten Zustand der Windleitrichtung und bei Vorwärtsfahrt des Kraftwagen gesehen- hinteren Randkante des Windleitelements angeordnet sind oder sich bis zur oder nahe zur hinteren Randkante erstrecken. Aufgrund dieser Anordnung der Störkörper sind diese in Draufsicht auf die Oberseite des Windleitelements nicht zu erkennen. Diese bilden vielmehr an der Unterseite des Windleitelements eine definierte Störungs-/Unebenheitsstruktur aus, so dass die so realisierte, definiert unebene Unterseitentopografie des Windleitelements die gewünschte Ablösung der Luftströmung an der hinteren Randkante des Windleitelements bewirkt.

Grundsätzlich ist es möglich, die Störkörper einstückig mit dem Windleitelement auszubilden, was bei bestimmten Ausführungsformen des Windleitelements dessen Herstellung vereinfachen kann. Bei einem anderen Ausführungsbeispiel der Windleiteinrichtung ist vorgesehen, dass die Störkörper an einem lamellenförmigen, vorzugsweise eine zumindest gewisse Eigensteifigkeit aufweisenden Flächenelement vorgesehen, insbesondere ausgebildet sind, welches an der Unterseite des Windleitelements in dessen der hinteren Randkante nahen Bereich an diesem befestigt wird. Die Längserstreckung des Flächenelements kann mit dem des Windleitelements übereinstimmen oder aber kleiner sein. Besonders vorteilhaft an dieser Ausführungsform ist, dass das die Störkörper aufweisende Flächenelement aus einem anderen Material als das lamellenförmige Windleitelement herstellbar ist.

Die Form und Anordnung sowie Anzahl der erfindungsgemäßen Störkörper für das jeweilige Windleitelement sind grundsätzlich variierbar und ist jeweils abhängig von der Anströmung des Windleitelements im Fahrbetrieb, was maßgeblich wiederum von der jeweiligen Karosserieform des Kraftwagens, der Neigung der Windschutzscheibe etc. abhängt.

Um die gewünschte Luftströmungsbeeinflussung beziehungsweise -ablösung an der hinteren Randkante des Windleitelements über zumindest Abschnitte dessen Längserstreckung zu realisieren, können die Störkörper in Form von Noppen oder leistenförmigen Elementen oder dergleichen ausgebildet sein. Möglich ist auch, dass nicht alle Störkörper die gleiche Form, Größe und Abstand aufweisen.

Bei länglichen und insbesondere leistenförmig ausgebildeten Störkörpern können diese außenumfangsseitig unterschiedlichste Ausgestaltungen beziehungsweise Konturen aufweisen. Beispielsweise können die Störkörper eine eckige, vorzugsweise mehreckige, insbesondere dreieckförmige oder viereckförmige Außenkontur aufweisen. Möglich ist auch, dass zumindest ein Teil der Störkörper umfangsseitig kantenfrei, insbesondere gekrümmt ausgebildet sind.

Bei einem vorteilhaften Ausführungsbeispiel der Windleiteinrichtung ist vorgesehen, dass zumindest ein Teil der Störkörper einen über deren Längserstreckungsrichtung variierenden Querschnitt aufweisen. Vorzugsweise weisen die jeweiligen Störkörper eine Längserstreckungsrichtung auf, welche insbesondere zumindest im Wesentlichen nicht parallel zur Längserstreckungsrichtung des Windleitelements verläuft. In Einbaulage der Windleiteinrichtung fällt die Längserstreckungsrichtung des Windleitelements vorzugsweise mit der Fahrzeugquerrichtung zusammen, wobei die Windleiteinrichtung ihre Einbaulage in vollständig hergestelltem Zustand des offenen Personenkraftwagens einnimmt. Mittels der länglichen Störkörper wird durch Beeinflussen und somit Verwirbeln der Luft ausreichend Energie in die Luft beziehungsweise der Strömung gebracht, dass daraus resultierende Verwirbelungen an einer in Fahrzeuglängsrichtung hinteren Kante des Windleitelements ausreichend sind, um unterwünschte Geräusche zu verhindern. Somit können übermäßige Windgeräusche, speziell Heul- und Pfeiftöne, bei ausgefahrenem Windleitelement, das heißt, wenn sich das Windleitelement in seiner Windleitstellung befindet, vermieden werden. Dadurch können beispielsweise auch Heul- und Pfeifgeräusche an Hinterkanten von Schiebedachdeckeln vermieden oder zumindest gering gehalten werden. Selbstverständlich ist es auch möglich, dass die Störkörper über deren Längserstreckung mit einem konstanten Querschnitt versehen sind.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine schematische Perspektivansicht auf eine Windleiteinrichtung gemäß einer ersten Ausführungsform für einen offenen Personenkraftwagen, mit einem inzwischen einer eingefahrenen Stellung in wenigstens einer Windleitstellung gegenüber einem Windschutzscheibenrahmen verstellbaren eigensteifen Windleitelement, wobei an dem Windleitelement eine Mehrzahl von Störkörpern angeordnet ist, welche außenumfangsseitig dreieckförmig ausgebildet sind;
- Fig. 2: ausschnittsweise eine schematische Rückansicht auf die Windleiteinrichtung gemäß Fig. 1 mit Blickrichtung in etwa in Vorwärtsfahrtrichtung des Kraftwagens;
- Fig. 3: ausschnittsweise eine weitere schematische und perspektivische Rückansicht auf die Windleiteinrichtung gemäß den Fig. 1 und 2;
- Fig. 4: ausschnittsweise eine schematische und perspektivische Unteransicht auf das Windleitelement gemäß einer zweiten Ausführungsform;
- Fig. 5: ausschnittsweise eine schematische und perspektivische Unteransicht auf das Windleitelement gemäß einer dritten Ausführungsform;
- Fig. 6: ausschnittsweise eine schematische und perspektivische Unteransicht auf das Windleitelement gemäß einer vierten Ausführungsform und
- Fig. 7: ausschnittsweise eine schematische und perspektivische Unteransicht auf das Windleitelement gemäß einer fünften Ausführungsform.

In den Figuren sind gleiche oder funktionsgleiche Elemente mit gleichen Bezugszeichen versehen.

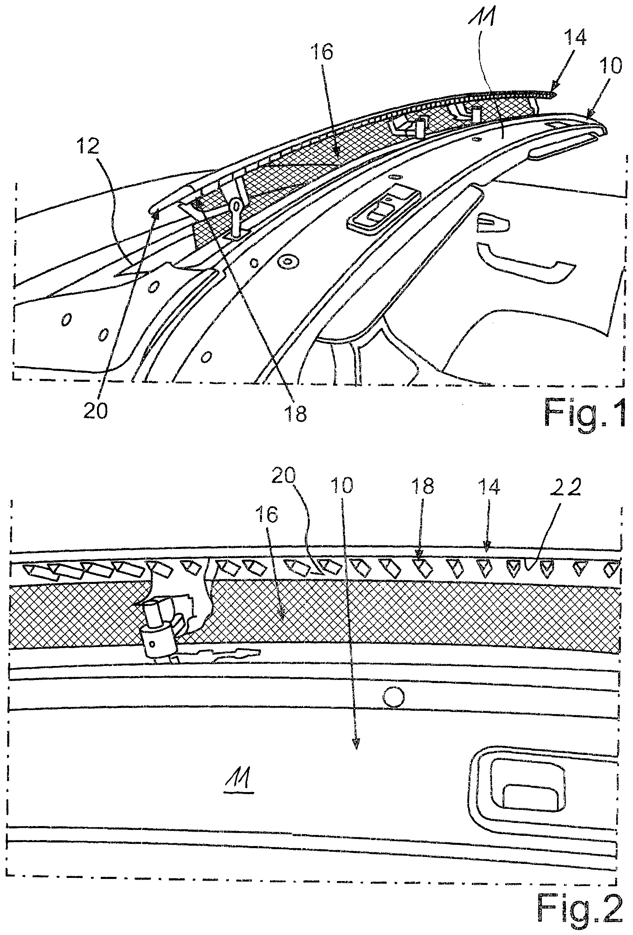

Fig. 1 zeigt in einer schematischen Perspektivansicht eine Windleiteinrichtung gemäß einer ersten Ausführungsform für einen offenen Personenkraftwagen. Der offene Personenkraftwagen ist beispielsweise als Cabriolet mit einem Verdeck in Form eines Stoffverdecks ausgebildet. Die folgenden Ausführungen können jedoch auch ohne weiteres auf andere, offene Personenkraftwagen wie beispielsweise Roadster übertragen werden, wobei ein solcher Roadster beispielsweise ein Verdeck mit eigensteifen Verdeckelementen, das heißt ein sogenanntes Klappdach, umfasst, oder auch auf geschlossene Kraftwagen mit beispielsweise einem Schiebe- oder Schiebehebedach, wobei ein solches Fahrzeug eine mittels mindestens eines Deckelelements öffenbaren und verschließbaren Dachöffnung aufweist, die im Bereich ihres vorderen Querrandes mit einer erfindungsgemäßen Windleiteinrichtung versehen sein kann.

Das Verdeck des offenen Personenkraftwagens ist zwischen wenigstens einer Offenstellung und einer Schließstellung relativ zur Karosserie des Personenkraftwagens verlagerbar, wobei der Innenraum des Personenkraftwagens in der Schließstellung in Fahrzeughochrichtung nach oben durch das Verdeck überdeckt ist.

Der Personenkraftwagen beziehungsweise dessen Karosserie umfasst einen besonders gut in Fig. 1 erkennbaren oberen Windschutzscheibenquerträger 11, der Teil eines Windschutzscheibenrahmens 10 ist, durch welchen eine Scheibenöffnung in Fahrzeughochrichtung nach oben begrenzt ist. In die Scheibenöffnung ist eine Windschutzscheibe 12 des Personenkraftwagens eingesetzt. Bei einer Vorwärtsfahrt des Personenkraftwagens wird die Windschutzscheibe 12 von Luft, das heißt von Fahrtwind angeströmt, wobei die Windschutzscheibe die Luft beziehungsweise den Fahrtwind nach oben leitet. Um nun die Luftströmung bei einer Fahrt des Personenkraftwagens mit geöffnetem Verdeck über den Innenraum zu leiten, zu vergleichsmäßigen und hierdurch übermäßige Zuglufterscheinungen, die zum Beispiel durch eine sich hinter dem Innenraum bildende und gegebenenfalls auch von den Insassen spürbar wahrnehmbare horizontale Windwalze entstehen können, zu vermeiden oder deren Wirkung zumindest abzuschwächen, ist die erfindungsgemäße Windleiteinrichtung vorgesehen, welche im Bereich des Windschutzscheibenquerträgers 11 angeordnet ist.

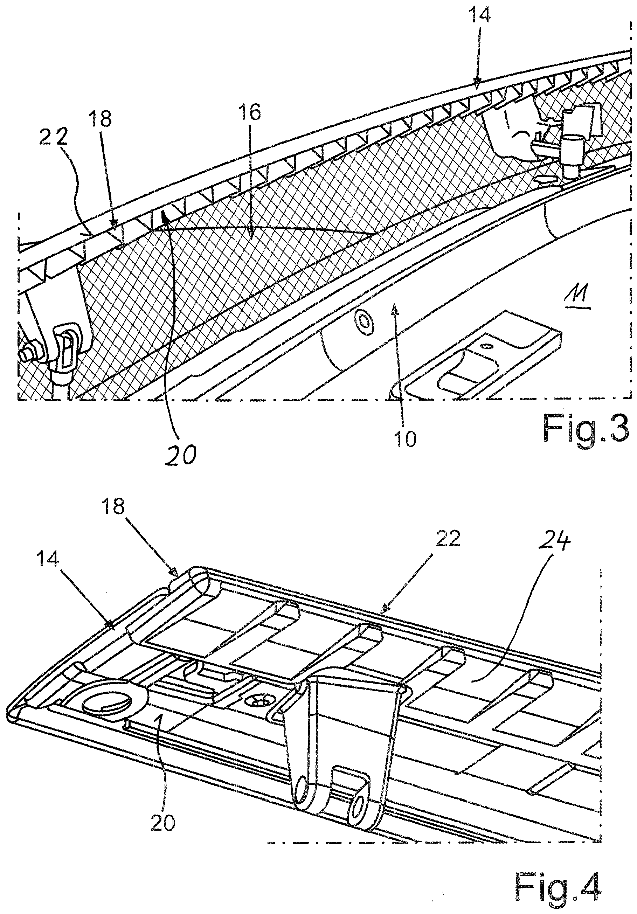

Wie besonders gut in Zusammenschau mit den Fig. 2 und 3 erkennbar ist, umfasst die Windleiteinrichtung ein eigensteifes, das heißt formstabiles Windleitelement 14, welches auch als Lamelle oder Flügel bezeichnet wird und sich zumindest im Wesentlichen in Fahrzeugquerrichtung erstreckt. Das Windleitelement 14 weist dabei eine Längserstreckungsrichtung auf, welche zumindest im Wesentlichen in Fahrzeugquerrichtung verläuft.

Das Windleitelement 14 ist zwischen einer eingefahrenen Stellung, insbesondere Nichtgebrauchsstellung, nahe des Windschutzscheibenrahmens 10 und wenigstens einer Windleitstellung (Gebrauchsstellung) in Fahrzeughochrichtung relativ zu dem Windschutzscheibenrahmen 10 bewegbar. Dies bedeutet, dass das Windleitelement 14 aus der eingefahrenen Stellung nahe des Windschutzscheibenrahmens 10 in die wenigstens eine Windleitstellung in Fahrzeughochrichtung nach oben relativ zu dem Windschutzscheibenrahmen 10 beziehungsweise des oberen Windschutzscheibenquerträgers 11 verstellt werden kann. Bei dem in den Fig. 1 bis 3 dargestellten Ausführungsbeispiel ist das lamellenförmige Windleitelement 14 schräg zu einer gedachten Horizontalen und insbesondere zum darstellten Windschutzscheibenquerträger 11 angeordnet.

Darüber hinaus umfasst die Windleiteinrichtung ein flexibles, das heißt formlabiles Flächenelement 16, welches beispielsweise als Netz beziehungsweise aus einem Netzstoff gebildet ist und demzufolge von der Luft durchströmbare Durchströmöffnungen aufweist. Das flexible Flächenelement 16 ist mit dem Windleitelement 14 verbunden und demzufolge mit dem Windleitelement 14 zwischen der eingefahrenen Stellung der wenigstens einen Windleitstellung mitbewegbar beziehungsweise mitverstellbar, wobei die wenigstens eine Windleitstellung in Fig. 1 bis 3 gezeigt ist.

In den Fig. 1 bis 3 ist demzufolge erkennbar, dass das Flächenelement 16 in der wenigstens einen Windleitstellung zwischen dem Windleitelement 14 und dem eigensteifen Windschutzscheibenrahmen 10 aufgespannt ist. Das eigensteife Windleitelement 14 und das flexible Flächenelement 16 dienen dazu, bei einer offenen Fahrt des Personenkraftwagens die über die Windschutzscheibe 12 strömende Luft über den Innenraum zu leiten, zu vergleichsmäßigen und dadurch übermäßige Zuglufterscheinungen zu vermeiden sowie Verwirbelungen und daraus resultierende Windgeräusche zumindest gering zu halten. Im Einzelnen wird mittels des in Gebrauchsstellung angeordneten, lamellenförmigen Windleitelement 14 die Luftströmung angehoben, während zugleich mittels des Netzes 16 kontrolliert das Druckniveau im Fahrzeuginnenraum angehoben wird.

Zur Wirkungsweise des Windleitelements 14 und des Flächenelements 16: Im Fahrbetrieb des Kraftwagens bei in Gebrauchsstellung angehobenem Windleitelement 14 wird die über die Windschutzscheibe und von dort über die Dachvorderkante geleitete Luftströmung mittels des lamellenförmigen Windleitelements 14 zum Teil nach oben abgelenkt, strömt über das Windleitelement 14 nach hinten und reißt an einer hinteren Randkante des Windleitelements 14 ab. Ein anderer Teil der ankommenden Luftströmung wird nach unten abgelenkt und strömt durch das flexible Flächenelement 16 und nachfolgend entlang des Freiraums zwischen dem Windleitelement 14 und dem Windschutzscheibendachrahmens 10 über das Windleitelement 14 nach hinten und reißt ebenfalls an einer hinteren Randkante des Windleitelements 14 ab. Diese abgelöste zweite Teilluftströmung bildet eine Luftschicht zwischen der darüber befindlichen, schnelleren ersten Teilluftströmung und der darunter im Fahrgastraum befindlichen Luftmasse.

Um nun den bereits hohen Fahrkomfort insbesondere bei einer offenen Fahrt des Personenkraftwagens weiter zu verbessern, sind an dem Windleitelement 14 eine Mehrzahl von Störkörpern 18 angeordnet, welche bei dem Ausführungsbeispiel gemäß der Fig. 1 bis 3 außenumfangsseitig dreieckförmig ausgebildet sind. Die eigensteifen Störkörper 18 sind besonders gut in den Fig. 2 und 3 erkennbar. Dabei sind die Störkörper 18 in Längserstreckungsrichtung des Windleitelements 14, das heißt in Fahrzeugquerrichtung aufeinanderfolgend angeordnet und voneinander beabstandet, wobei bei dem hier dargestellten Ausführungsbeispiel der Windleiteinrichtung die Störkörper 18 paarweise gleichmäßig voneinander beabstandet sind. Dies bedeutet, dass jeweilige Abstände zwischen den Störkörpern 18 paarweise gleich sind. Grundsätzlich ist es jedoch auch möglich, dass die Störkörper 18 unterschiedliche, das heißt unregelmäßige Abstände zueinander aufweisen können. Ferner weisen die Störkörper eine schräg oder vorliegend senkrecht zur Längserstreckungsrichtung des Windleitelements 14 verlaufende Längserstreckungsrichtung auf und sind dabei im Querschnitt dreieckförmig ausgebildet. Die Störkörper 18 sind somit dreieckige, längliche Störkörper, welche sich zumindest über die überwiegende, in Fahrzeuglängsrichtung verlaufende Breite des Windleitelements 14 erstrecken. Dies bedeutet, dass sich die Störkörper 18 über mehr als die Hälfte der in Fahrzeuglängsrichtung verlaufenden Breite des Windleitelements 14 erstrecken.

In den Fig. 2 und 3 ist besonders gut erkennbar, dass die Störkörper 18 auf einer zumindest in der wenigstens einen Windleitstellung dem Windschutzscheibenrahmen 10 zugewandten und somit in Fahrzeughochrichtung nach unten weisenden Unterseite 20 des Windleitelements 14 angeordnet sind. Die an der Unterseite 20 des Windleitelements 14 vorgesehenen Störkörper 18 enden praktisch an beziehungsweise bündig mit einer hinteren Randkante 22 des Windleitelements 14, an der die Luftströmung beziehungsweise der zwischen dem Windleitelement 14 und dem Windschutzscheibenrahmen 10 strömende Teilluftstrom vom Windleitelement 14 abreißt.

Die Randkante 22 ist bei dem Ausführungsbeispiel gemäß der Fig. 1 bis 3 relativ scharfkantig ausgebildet, kann jedoch - je nach Ausgestaltung des Windleitelements 14-auch ohne weiteres eine gewisse Krümmung aufweisen, wie nachfolgend anhand der in den Fig. 4 bis 7 dargestellten Ausführungsformen des Windleitelements 14 noch näher beschrieben wird.

Es hat sich gezeigt, dass die Störkörper 18, welche zumindest in der wenigstens einen Windleitstellung bei einer Vorwärtsfahrt des Personenkraftwagens von der Luft, welche von der Windschutzscheibe 12 abgeleitet wird, umströmbar sind, die Luft beziehungsweise deren Strömung derart vorteilhaft beeinflussen, dass übermäßige Windgeräusche und Luftverwirbelungen vermieden werden können. Dadurch kann ein besonders hoher Fahrkomfort für sich im Innenraum aufhaltende Personen bei einer offenen Fahrt realisiert werden.

Es kann vorgesehen sein, dass die Störkörper 18 einstückig mit dem Windleitelement 14 ausgebildet sind. Alternativ dazu ist es denkbar, dass die Störkörper 18 als separat von dem Windleitelement 14 ausgebildete und an dem Windleitelement 14 befestigte Bauteile ausgebildet sind.

Ferner ist es vorzugsweise vorgesehen, dass die Störkörper 18 zumindest über die überwiegende, in Fahrzeugquerrichtung verlaufende Länge des Windleitelements 14 verteilt angeordnet sind, um dadurch eine besonders vorteilhafte Beeinflussung der die Störkörper 18 beziehungsweise das Windleitelement 14 umströmenden Luft zu realisieren.

Fig. 4 zeigt in einer schematischen und perspektivischen Unteransicht das Windleitelement 14 gemäß einer zweiten Ausführungsform, welche sich insbesondere dadurch von der ersten Ausführungsform unterscheidet, dass die Störkörper 18 außenumfangsseitig beziehungsweise im Querschnitt nicht etwa dreieckförmig ausgebildet sind, sondern vielmehr in Längserstreckungsrichtung zumindest im Wesentlichen keilförmig beziehungsweise nach Art eines Keils ausgebildet sind und dabei lediglich in ihrer Seitenansicht beziehungsweise in ihrer Längsschnittansicht eine Dreiecksform aufweisen. Demzufolge weisen die Störkörper 18 einen in Längserstreckungsrichtung variierenden Querschnitt auf. Der jeweilige, zwischen zwei benachbart angeordneten Störkörper 18 seitlich und von der Unterseite 20 des Windleitelements 14 nach oben begrenzte Spalt beziehungsweise Kanal weist einen sich in Richtung der hinteren Randkante 22 größer werdenden freien Querschnitt auf.

Auch bei der zweiten Ausführungsform sind die Störkörper 18 an der Unterseite 20 angeordnet und stehen zumindest im Wesentlichen in Fahrzeuglängsrichtung nach unten hin von der Unterseite 20 beziehungsweise dem Windleitelement 14 ab. Wie bei der ersten Ausführungsform verlaufen die jeweiligen Störkörper 18 mit ihrer Längserstreckungsrichtung zumindest im Wesentlichen senkrecht zur Längserstreckungsrichtung des Windleitelements 14.

In Einbaulage der Windleiteinrichtung fällt die Längserstreckungsrichtung des Windleitelements 14 zumindest im Wesentlichen mit der Fahrzeugquerrichtung zusammen. Bezogen auf die Windleitstellung erstrecken sich somit die langen beziehungsweise länglichen Störkörper 18 zumindest im Wesentlichen in Fahrzeuglängsrichtung von vorne nach hinten, wobei ihre in Fahrzeughochrichtung verlaufende Erstreckung, das heißt ihre in Fahrzeughochrichtung verlaufende Dicke in Fahrzeuglängsrichtung von vorne nach hinten zunimmt. Dies bedeutet, dass die Störkörper 18 an einer in Fahrzeuglängsrichtung hinteren Kante 22 des Windleitelements 14 in Fahrzeuglängsrichtung nach unten weiter von der Unterseite 20 abstehen als in einem Bereich, welcher in Fahrzeuglängsrichtung vor der hinteren Kante 22 angeordnet ist. Die Kante 22 ist somit eine in Einbaulage der Windleiteinrichtung in Fahrzeuglängsrichtung nach hinten weisende Hinter-/Randkante des Windleitelements 14.

Mittels der Störkörper 18 wird Luft, welche das Windleitelement 14 und die Störkörper 18 beispielsweise bei einer Vorwärtsfahrt des offenen Personenkraftwagens und in der Windleitstellung des Windleitelements 14 umströmt, derart beeinflusst, dass die Luft beziehungsweise ihre Strömung verwirbelt wird. Dadurch entstehen Verwirbelungen der Luft, insbesondere an der Hinterkante (Kante 22), wobei diese Verwirbelungen ausreichend sind, um übermäßige und unerwünschte Geräusche zu verhindern. Dadurch können Windgeräusche, speziell Heul- und Pfeiftöne, bei ausgefahrenem Windleitelement 14 vermieden oder zumindest gering gehalten werden.

Ferner ist es bei der zweiten Ausführungsform vorgesehen, dass die Störkörper 18, welche beispielsweise aus einem Kunststoff gebildet sind, einstückig miteinander ausgebildet sind. Hierbei werden die Störkörper 18 beispielsweise durch eine einstückige Leiste oder ein die Störkörper aufweisendes, vorzugsweise eigensteifes Flächenelement 24 gebildet, welche an der Unterseite 20 des Windleitelements 14 angeordnet ist. Diese Leiste weist dabei eine Längserstreckungsrichtung auf, welche mit der Längserstreckungsrichtung des Windleitelements 14 zusammenfällt. Die einzelnen Störkörper 18 sind in Längserstreckungsrichtung des Windleitelements 14 voneinander beabstandet, so dass in Längserstreckungsrichtung des Windleitelements 14 zwischen den jeweiligen Störkörpern 18 jeweilige Zwischenräume angeordnet sind.

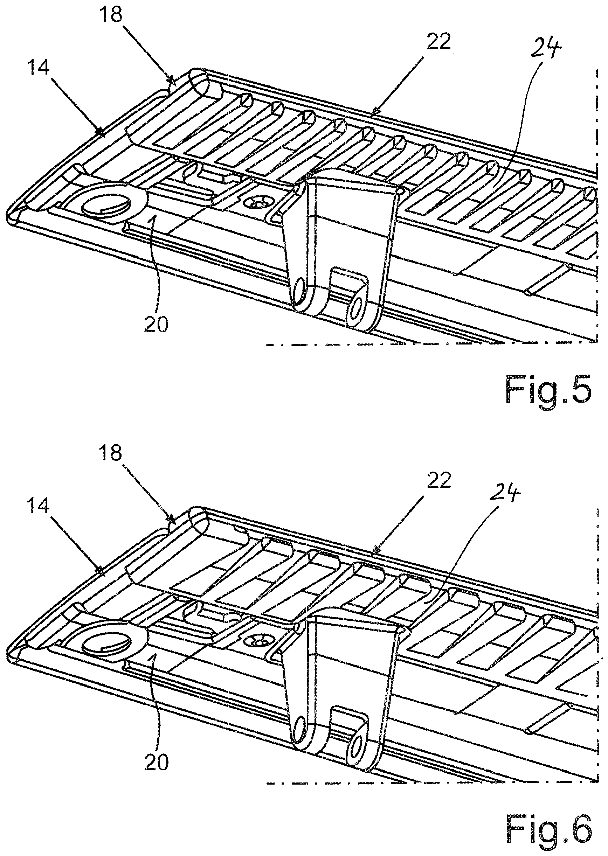

Fig. 5 zeigt das Windleitelement 14 gemäß einer dritten Ausführungsform. Die dritte Ausführungsform unterscheidet sich insbesondere dadurch von der zweiten Ausführungsform, dass die Anzahl an Störkörpern 18 bei der dritten Ausführungsform höher als bei der zweiten Ausführungsform ist. Beispielsweise ist es bei der zweiten und dritten Ausführungsform vorgesehen, dass die Störkörper 18 eine zumindest im Wesentlichen konstante, in Längserstreckungsrichtung des Windleitelements 14 verlaufende Breite, jedoch variierende Höhe, aufweisen. Somit weisen die Störkörper 18 auch hier einen in Längserstreckungsrichtung variierenden Querschnitt auf.

Fig. 6 zeigt eine vierte Ausführungsform des Windleitelements 14 mit den Störkörpern 18. Die vierte Ausführungsform unterscheidet sich insbesondere dadurch von der zweiten und dritten Ausführungsform, dass die jeweilige Breite der Störkörper 18 in Fahrzeuglängsrichtung von vorne nach hinten beziehungsweise in Längserstreckungsrichtung der Störkörper 18 nach hinten hin zunimmt.

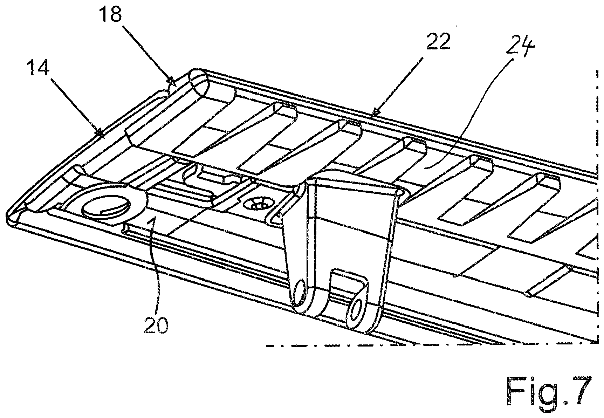

Schließlich zeigt die Fig. 7 eine fünfte Ausführungsform des Windleitelements 14 beziehungsweise der Störkörper 18. Bei der fünften Ausführungsform ist es vorgesehen, dass die jeweilige, sich in Längserstreckungsrichtung des Windleitelements 14 erstreckende Breite der Störkörper 18 in Längserstreckungsrichtung der Störkörper 18 von vorne nach hinten abnimmt. Hierdurch werden die Zwischenräume zwischen den Störkörpern 18 bei der fünften Ausführungsform in Längserstreckungsrichtung der Störkörper 18 von vorne nach hinten breiter, wobei diese Zwischenräume bei der vierten Ausführungsform in Längserstreckungsrichtung der Störkörper 18 von vorne nach hinten schmaler werden. Insgesamt ist aus den Figuren erkennbar, dass die beispielsweise als Längsstörkörper ausgebildeten Störkörper 18 in Anzahl und/oder Breite variieren können, wobei auch ihre Anformung aus konstruktiven Gründen flach sein kann.

Dem Einsatz der Störkörper 18 liegt insbesondere die Erkenntnis zugrunde, dass es an überströmten Profilen wie beispielsweise Deckeln und an der Hinterkante zu sogenanntem Hinterkantenlärm mit Heul- und/oder Pfeiftönen kommen kann. Ursache hierbei sind zeitlich fluktuierende Geschwindigkeitsunterschiede auf Ober- und Unterseite des Profils sowie kohärente Ablösungen. Durch die in Längserstreckungsrichtung einen variierenden Querschnitt aufweisenden Störkörper 18 können speziell bei hohen Geschwindigkeitsunterschieden diese Heul- und Pfeiftöne reduziert oder gar vollständig eliminiert werden, da die Luft beziehungsweise ihre Strömung mittels der Störkörper 18 gezielt beeinflusst und insbesondere verwirbelt wird.

Festzuhalten bleibt noch, dass die Störkörper nicht zwingend deutlich länger in x-Richtung (Fahrzeuglängsrichtung) sein müssen als ihre Erstreckung in y-Richtung (Fahrzeugquerrichtung) oder z-Richtung (Fahrzeughochrichtung). Dies ist beispielsweise bei kegel- oder kegelstumpfförmigen Störkörper der Fall.

## Patentansprüche

1. Windleiteinrichtung für einen offenen Personenkraftwagen, mit einem zwischen einer eingefahrenen Stellung und wenigstens einer Windleitstellung gegenüber einem Windschutzscheibenrahmen (10) verstellbaren eigensteifen, lamellenförmigen Windleitelement (14), an dessen -bei in Windleitstellung angeordnetem Windleitelement (14) gesehen- Unterseite (20) mehrere Störkörper (18) angeordnet sind,
**dadurch gekennzeichnet, dass**
die Störkörper (18) im Bereich der -im Kraftwagen eingebauten Zustand der Windleitrichtung und bei Vorwärtsfahrt des Kraftwagen gesehen- hinteren Randkante (22) des Windleitelements (14) angeordnet sind oder sich bis zur oder nahe zur hinteren Randkante (22), an der der zwischen dem Windleitelement (14) und dem Windschutzscheibenrahmen (10) strömende Teilluftstrom vom Windleitelement (14) abreißt, erstrecken.

2. Windleiteinrichtung nach Anspruch 1,
**dadurch gekennzeichnet, dass**
die Störkörper (18) so ausgebildet und angeordnet sind, dass im Fahrbetrieb des Kraftwagens und bei in Windleitstellung angeordnetem Windleitelement (14) eine nicht-kohärente Ablösung der Luftströmung an der hinteren Randkante (22) des Windleitelements (14) über zumindest einen wesentlichen Teil der Längserstreckung des Windleitelements (14) realisierbar ist.

3. Windleiteinrichtung nach einem der vorhergehenden Ansprüche,
**dadurch gekennzeichnet, dass**
die Störkörper (18) in Längserstreckungsrichtung des Windleitelements (14) aufeinander folgend angeordnet und voneinander beabstandet sind.

4. Windleiteinrichtung nach einem der vorhergehenden Ansprüche,
**dadurch gekennzeichnet, dass**
die Störkörper (18) leistenförmig ausgebildet sind.

5. Windleiteinrichtung nach einem der vorhergehenden Ansprüche,
**dadurch gekennzeichnet, dass**
die Störkörper (18) eine schräg oder senkrecht zur Längserstreckungsrichtung des Windleitelements (14) verlaufende Längserstreckungsrichtung aufweisen.

6. Windleiteinrichtung nach einem der vorhergehenden Ansprüche,
**dadurch gekennzeichnet, dass**
Störkörpern (18) einen über deren Längserstreckungsrichtung variierenden Querschnitt aufweisen.

7. Windleiteinrichtung nach einem der vorhergehenden Ansprüche,
**dadurch gekennzeichnet, dass**
ein flexibles Flächenelement (16) vorgesehen ist, welches in der wenigstens einen Windleitstellung zwischen dem Windleitelement (14) und dem Windschutzscheibenrahmen (10) aufgespannt ist.

8. Kraftfahrzeug mit einer nach einem der Ansprüche 1 bis 7 ausgebildeten Windleiteinrichtung.

## Claims

1. Air deflecting device for an open passenger car, comprising an intrinsically rigid lamellar air deflecting element (14), which can be adjusted with respect to a windscreen frame (10) between a retracted position and at least one air deflecting position and on the underside of which as viewed with the air deflecting element (14) in an air deflecting position several interference bodies (18) are arranged,
**characterised in that**
the interference bodies (18) are arranged in the region as viewed in the installed state of the air deflecting device and during forward travel of the motor vehicle of the rear marginal edge (22) of the air deflecting element (14) or extend up to or close to the rear marginal edge (22), where the part-airflow flowing between the air deflecting element (14) and the windscreen frame (10) breaks off from the air deflecting element (14).

2. Air deflecting device according to claim 1,
**characterised in that**
the interference bodies (18) are designed and arranged such that, in the travelling mode of the motor vehicle and with the air deflecting element (14) in an air deflecting position, a non-coherent separation of the airflow at the rear marginal edge (22) of the air deflecting element (14) along at least a substantial part of the length of the air deflecting element (14) can be obtained.

3. Air deflecting device according to any of the preceding claims,
**characterised in that**
the interference bodies (18) are arranged consecutively in the longitudinal direction of the air deflecting element (14) and spaced from one another.

4. Air deflecting device according to any of the preceding claims,
**characterised in that**
the interference bodies (18) are designed to be strip-shaped.

5. Air deflecting device according to any of the preceding claims,
**characterised in that**
the interference bodies (18) have a longitudinal direction which extends at an angle or perpendicularly to the longitudinal direction of the air deflecting element (14).

6. Air deflecting device according to any of the preceding claims,
**characterised in that**
the interference bodies (18) have a cross-section which varies along their longitudinal direction.

7. Air deflecting device according to any of the preceding claims,
**characterised in that**
a flexible planar element (16) is provided, which is stretched between the air deflecting element (14) and the windscreen frame (10) in the at least one air deflecting position.

8. Motor vehicle with an air deflecting device designed according to any of claims 1 to 7.

## Revendications

1. Dispositif déflecteur d'air pour un véhicule automobile cabriolet, comprenant un élément déflecteur d'air en forme de lamelle, rigide, réglable entre une position rétractée et au moins une position de déflexion d'air par rapport à un cadre de pare-brise (10), sur le côté inférieur (20) duquel étant disposés plusieurs corps de perturbation (18) lorsqu'on observe l'élément déflecteur d'air (14) en position de déflexion d'air,
**caractérisé en ce que**
les corps de perturbation (18) sont disposés dans la zone du bord marginal (22) arrière de l'élément déflecteur d'air (14) lorsqu'on l'observe une fois le dispositif déflecteur d'air monté et dans le sens de la marche avant du véhicule automobile, ou s'étendent jusqu'au bord marginal arrière (22) ou quasiment à proximité de ce dernier sur lequel vient se séparer le flux d'air partiel s'écoulant entre l'élément déflecteur d'air (14) et le cadre de pare-brise (10).

2. Dispositif déflecteur d'air selon la revendication 1, **caractérisé en ce que** les corps de perturbation (18) sont conçus et disposés de telle sorte que, lorsque le véhicule automobile est en fonctionnement, et lorsque l'élément déflecteur d'air (14) disposé en position de déflexion d'air il est possible de réaliser une séparation non cohérente du flux d'air sur le bord marginal arrière (22) de l'élément réflecteur d'air (14) sur au moins une partie considérable de l'étendue longitudinale de l'élément déflecteur (14).

3. Dispositif déflecteur selon l'une quelconque des revendications précédentes, **caractérisé en ce que** les corps de perturbation (18) sont disposés les uns derrière les autres et espacés les uns des autres dans la direction longitudinale de l'élément déflecteur d'air (14).

4. Dispositif déflecteur selon l'une quelconque des revendications précédentes, caractérisé e ce que les corps de perturbation (18) sont conçus sous la forme de barres.

5. Dispositif déflecteur selon l'une quelconque des revendications précédentes, **caractérisé en ce que** les corps de perturbation (18) présentent une direction longitudinale s'étendant obliquement ou perpendiculairement à la direction longitudinale de l'élément déflecteur d'air (14).

6. Dispositif déflecteur selon l'une quelconque des revendications précédentes, **caractérisé en ce que** les corps de perturbation (18) présentent une section transversale pouvant varier sur leur étendue longitudinale.

7. Dispositif déflecteur selon l'une quelconque des revendications précédentes, **caractérisé en ce qu'**un élément plan souple (16) est tendu dans ladite position de déflexion d'air entre l'élément déflecteur d'air (14) et le cadre de pare-brise (10).

8. Véhicule automobile comprenant un dispositif déflecteur d'air conçu selon l'une quelconque des revendications 1 à 7.
